# EUROPEAN PATENT APPLICATION

(11) **EP 2 015 242 A1**
(43) Date of publication of application: **14.01.2009**
(21) Application number: 07290794.2
(22) Date of filing: 26.06.2007
(51) Int. Cl.: G06Q 20/00

(54) **Method and system for securing online transactions**

(71) Applicant: Alcatel Lucent, 75008 Paris (FR)
(72) Inventor: Papillon, Serge, 75014 Paris (FR); Dubus, Samuel, 75014 Paris (FR)
(74) Representative: Kohler Schmid Möbus

(57) **Abstract**

A method of securing an online transaction comprises the steps of:
- requesting a transaction by a first party (2) from a second party (3) over a public network (6), e.g., the internet;
- upon receiving the transaction request by the second party (3), sending a validation request to the first party (2);
- upon receiving the validation request by the first party (2), sending a validation reply from the first party (2);
- monitoring the validation reply for securing the online transaction by the second party (3).

The proposed method further comprises the steps of:
- using a derivative communication medium (7), which is distinct from the public network (6), for sending the validation request to the first party (2);
- interactively replying to the validation request by the first party (2) over the derivative communication medium (7), particularly in real time.

## Description

### Background of the invention

The present invention relates to a method of securing an online transaction comprising the steps of:
- requesting a transaction by a first party from a second party over a public network, e.g., the internet;
- upon receiving the transaction request by the second party, sending a validation request to the first party;
- upon receiving the validation request by the first party, sending a validation reply from the first party;
- monitoring the validation reply for securing the online transaction by the second party.

Furthermore, the present invention relates to a system for securing an online transaction between a first party associated with a first party terminal and a second party associated with a second party terminal, wherein the first and second party terminals are connected over a public network, e.g., the internet, wherein:
- the first party terminal comprises means for requesting the online transaction from the second party terminal over the public network;
- the second party terminal comprises means for receiving the transaction request and means for generating a validation request to the first party;
- the first party has means for receiving the validation request and for sending a corresponding validation reply;
- the second party terminal comprises means for monitoring the validation reply for securing the online transaction.

Security of online transactions is a major issue of the internet economy. In recent years, the profile of computer criminals has considerably changed, shifting from individuals who merely wanted to cause trouble to organized cybercriminals. The latter aim at earning money, and one way to achieve this is to place online orders for goods and services by using someone else's credit card or bank account. Another way is to impersonate a customer with respect to online bank services in order to request money transfer.

While there are many technical ways to perform the above-described types of cyber crime, a central aspect is the authentication problem. In other words: How can, e.g., the bank or an online professional be sure that a person who is using a requested service actually is the real customer?

A state of the art solution to the above-described problem is two factor authentication. First, authentication is performed using something the customer knows, which may be realized in the form of a classical login/password approach. Second, authentication is performed using something the customer owns, for instance a physical token generator provided by the bank or by means of the customer's mobile phone.

The main problem connected with two factor authentication resides in the fact that it does not offer any protection against a "man in the middle" type of attack, i.e., a cybercriminal having access to the communication path between customer and service provider and thus being able to steal all secrets and to manipulate communication in connection with the online transaction.

### Object of the Invention

It is the object of the present invention to provide a method and a system of the above-defined type which allow to perform automatic validation of online transactions between a customer and a commercial site in order to increase a security level thereof.

### Summary of the Invention

The object is achieved by means of a method comprising the features of appended patent claim 1 and by means of a system comprising the features of appended patent claim 6.

Advantageous further embodiments of the present invention are comprised in the subclaims, the contents of which are herewith incorporated by reference in the present description in order to avoid unnecessary repetition of text.

According to the present invention, a method of securing an online transaction, comprising the steps of:
- requesting a transaction by a first party from a second party over a public network, e.g., the internet;
- upon receiving the transaction request by the second party, sending a validation request to the first party;
- upon receiving the validation request by the first party, sending a validation reply from the first party;
- monitoring the validation reply for securing the online transaction by the second party;
is characterised by the steps of:
- using a derivative communication medium, which is distinct from the public network, for sending the validation request to the first party;
- interactively replying to the validation request by the first party over the derivative communication medium, particularly in real time.

Furthermore, in accordance with the present invention a system for securing an online transaction between a first party associated with a first party terminal and a second party associated with a second party terminal, wherein the first and second party terminals are connected over a public network, e.g., the internet, wherein:
- the first party terminal comprises means for requesting the online transaction from the second party terminal over the public network;
- the second party terminal comprises means for receiving the transaction request and means for generating a validation request to the first party;
- the first party has means for receiving the validation request and for sending a corresponding validation reply;
- the second party terminal comprises means for monitoring the validation reply for securing the online transaction;
is characterised by:
- a derivative communication medium, which is distinct from the public network, for sending the validation request to the first party associated with the first party terminal;
- first party communication means in connection with the derivative communication medium for interactively replying to the validation request by the first party over the derivative communication medium, particularly in real time.

In this way, the present invention provides a novel solution for performing automatic validation of online transactions between a customer and a commercial site. According to the present solution, validation of online transactions is performed interactively over a derivative communication medium, which is distinct form the public network used for requesting the online transaction. According to a preferred embodiment, said validation is performed essentially in real time.

According to further embodiments of the present invention, for communication over the derivative communication medium the first (requesting) party uses said first party communication means, i.e., a second terminal distinct from said first party terminal. Said first party communication means may be devised in the form of a mobile phone.

According to further embodiments of the present invention, it is proposed to realize said validation request by way of a phone call to the requesting party, wherein said phone call may be initiated by a separate validation entity, which does not involve any human operator. In corresponding embodiments of the system in accordance with the present invention, said validation entity may be devised in the form of an automatic voice validation server, which is devised to send corresponding voice messages in automated fashion.

Said voice validation server may generate a request validation message which involves vocally asking the customer to perform a certain validation operation interactively and preferably in real time. Said validation operation may comprise composing a code on a phone keyboard or repeating an alpha-numerical sequence of characters.

Since automation of the above-described kind of processes is readily achievable using state of the art techniques, they ensure scalability of the proposed solution, which cannot be provided by a human operator.

Embodiments of the present invention rely on using a separate validation entity in the form of a so called vocal validation server, which performs a call to the customer and thus incites an interactive validation process.

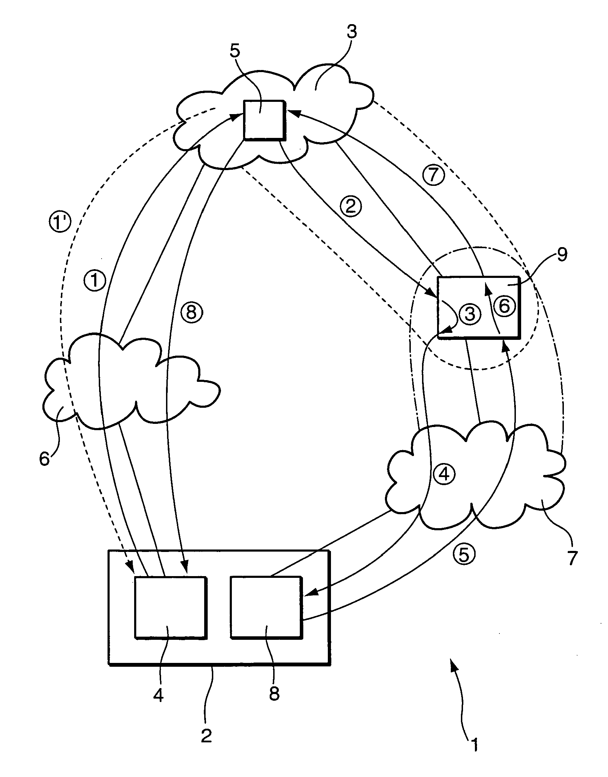

Further advantages and characteristics of the present invention can be gathered from the following description of preferred embodiments given by way of example only with reference to the enclosed drawing. Individual features mentioned above as well as below can be used in accordance with the present invention either individually or in conjunction. Exemplary embodiments described herein should not be regarded as an exhaustive enumeration but rather as examples with respect to a general concept underlying the present invention.

### Brief Description of the drawing

The only figure is a schematic drawing for illustrating embodiments of the method and the system in accordance with the present invention.

### Detailed description

The enclosed drawing is meant to illustrate exemplary embodiments of the method and the system in accordance with the present invention. As shown in the figure, the system 1 for securing an online transaction comprises a first party or customer 2 and a second party or online commercial site 3. The first party is associated with a first party terminal 4, e.g., a computer, while the second party 3 is associated with a second party terminal 5, e.g., a server computer of the online commercial site. The first party 2 and in the second party 3 are connected (linked) over a public network 6, e.g., the internet. Furthermore, the system 1 comprises a derivative communication medium 7, e.g., an operator's phone network, such as a mobile phone network. The first party 2 comprises communication means 8 in connection with the derivative communication medium 7. In addition, system 1 comprises a validation entity 9 in operative connection with both the second party 3 and the derivative communication medium 7.

As indicated by means of a dashed line, validation entity 9 may form part of second party 3 in one embodiment of the present invention. In an alternative embodiment of the present invention, validation entity 9 may form part of the derivative communication medium 7, as indicated in the figure by means of a dashed-dotted line.

The first party terminal 4 comprises means (e.g., software means, not shown) for requesting the online transaction from the second party terminal 5 over the public network 6. The second party terminal 5 comprises means (e.g., software means, not shown) for receiving the transaction request and means for generating a validation request to the first party 2. Furthermore, the first party 2 has means 8 for receiving the validation request and for sending a corresponding validation reply, and the second party terminal 5 comprises means (e.g., software means, not shown) for monitoring the validation reply for securing the online transaction.

Operation of the above-described system in terms of embodiments of the method in accordance with the present invention will now be described in detail with reference to the figure, wherein numbered arrows refer to information which is exchanged between corresponding entities of the system in order to perform embodiments of the method in accordance with the present invention.

Assume that a customer 2, i.e., a first party, places an online transaction order with an online commercial site, i.e., second party 3. By way of example only, second party 3 may be identified as the customer's bank. Accordingly, in step ① customer 2 places an order for a new service to the online site of his bank, i.e., to second party terminal 5, by means of first party terminal 4 over the public network 6, i.e., the internet. In subsequent step ② the commercial site requests validation of the transaction to validation entity 9. In the present example, validation entity 9 is devised in the form of a vocal validation server. In its request to vocal validation server 9, second party 3, i.e., second party terminal 5, includes an identifier (or the phone number) of customer 2 as well as a summary of the online order (cf. step ①).

In the present example it shall be assumed that the information of step ② only included an identifier of customer 2. Then in step ③, vocal validation server 9 determines the phone number of customer 2 based on the supplied ID information. Otherwise, i.e., if the second party 3 provided the phone number of customer 2 to vocal validation server 9, step ③ may be skipped.

Then, in step ④ vocal validation server 9 calls customer 2 over the derivative communication medium 7, thus engaging a real-time interactive validation process, which comprises two phases: during phase 1, vocal validation server 9 presents a vocal (audio) summary of the requested transaction (cf. step ①) to customer 2. To this end, customer 2 uses his or her first party communication means 8, which are in connection with the derivative communication medium 7. During phase 2 of the interactive validation process, vocal validation server 9 requests that customer 2 enter a certain code if he or she agrees with the transaction summary presented during phase 1.

Said code may be devised as follows: In one embodiment of the present invention, the code may be a randomly generated code, which is generated by vocal validation server 9 at the moment of or immediately before asking customer 2 to enter said validation code. In this context, the term "enter" may comprise typing the code on an input device of first party communication means 8, e.g., a phone keyboard, or repeating the code aloud into a microphone included in said first party communication means 8 in order to ensure that customer 2, i.e., the person using first party communication means 8, is a real person and not a fraudulent software robot.

In another embodiment of the present invention, the code may be transmitted to customer 2 from second party 3 during the ordering process. This is depicted in the drawing by means of dotted arrow①'. This will protect customer 2 from "blind" validation of a fraudulent transaction in case of theft of first party communication means 8. For instance, customer's mobile phone may have been stolen by another criminal who is independent from a cybercriminal trying to place a fraudulent transaction with second party 3. In this case, said further criminal may answer the phone call in step ④ and "blindly" provide the code, if the latter were transmitted together with the phone call in step ④. However, if customer 2 is not in possession of first party communication means 8 and if the code is transmitted as previously described with reference to step ①', then said further criminal will not be able to provide the requested validation code.

In still a further alternative embodiment of the present invention, in particular in case of very high value transactions, the nature of a further derivative communication medium (not shown in the figure), which need not be a mobile phone network, may be used as a second factor of authentication. This embodiment is meant to tackle the problem which may arise if said further criminal and the cybercriminal work together or do represent the same person. In this case, the code may be an authentication code which has been given to customer 2 by second party 3 in a secured way, e.g., by paper mail or even during a personal physical meeting.

It should be noted that in the first embodiment described above, the code is known to validation entity 9, while in the other cases the code is known to second party 3 only. However, in said other cases the code may also be transmitted to validation entity 9 from second party 3. The significance of this will become apparent later.

Then, in step ⑤ customer 2 validates the transaction if he or she agrees with the transaction summary by providing the requested code by means of first party communications means 8 through derivative communication medium 7 to validation entity 9. In the scope of the present example, it shall be assumed that customer 2 uses his or her mobile phone to enter (speak) the code. The latter then is transmitted through operator phone network 7 to vocal validation server 9. In step ⑥, vocal validation server 9 checks and recognizes the code transmitted by customer 2 and returns a corresponding result to the commercial site, i.e., second party 3, which monitors the result, for further processing of the order (step ⑦).

In embodiments of the present invention, wherein vocal validation server 9 thus not "know" the code, as stated above, step ⑦ may comprise forwarding the code itself to the second party 3. In this case, second party 3 itself will perform checking and validating of the code transmitted by customer 2.

Optionally, once the transaction has been validated, second party 3 could inform customer 2 of the validation of the transaction in optional step ⑧. In the drawing, step ⑧ may involve showing a validation massage on a graphical user interface (GUI) of a second party internet site. Alternatively, the validation message may be sent via Short Message Service (SMS) or other means, e.g., a phone call.

As will be appreciated by a person skilled in the art, the above-described solution comprises two major aspects. First, a vocal transaction summary is presented to the customer prior to the actual validation operation. Second, the validation process is performed in real time and interactively via a derivative communication medium, e.g., a phone network. If a criminal tries to perform a so called "man in the middle" attack, i.e., modify the order of the customer "on the fly" over the internet, the above-described solution protects the customer in two ways: First, the customer will notice any manipulation of the order while listening to the vocal transaction summary. Second, the criminal will not be able to validate the transaction, because he or she does not have physical access to the first party communication means used for interactively replying to the validation request.

Only one known way of attack could subvert the protective arrangement provided by the present invention: This would require hijacking the communication path through derivative communication medium 7, e.g., a phone line (either fixed or mobile) of the customer in connection with said "man in the middle" attack on the internet. However, this seems to be a very complex form of attack and thus seems to be rather unlikely. Hijacking of phone lines requires technical knowledge as well as physical means which seem to be far from being widely available. Even if such an attack seems to be technically feasible, cybercriminals most likely will not be able to use it.

As already mentioned above, two basic embodiments of the present invention may be distinguished as far as validation entity 9 is concerned. First, validation entity 9 may be located inside the network of an operator, i.e., the same operator which provides derivative communication medium 7, e.g., a service operator, an internet server provider (ISP), a phone operator, or the like. Second, validation entity 9 could be located in the network of the company which proposes the online commercial services in question, i.e., second party 3.

Implications of said alternatives will now be addressed in detail: If validation entity 9, e.g., a vocal validation server, is located in the second party network, then it may simply be regarded as a new piece of equipment in the internal network infrastructure of the commercial site. One side of said new equipment would be connected to the company's IT-network, and the other side would be connected to the (Intranet) Private Branch Exchange (PBX/IPBX) telephony system of the company.

It should be noted, that in case of this embodiment, it is crucial that maintaining of customer phone numbers in the vocal validation server be secured, so that a criminal will not be able to substitute a customer phone number with his or her own personal phone number.

A main advantage of this embodiment resides in the fact that the company (second party) is independent of any other third party service provider for the validation of its commercial site transactions with its customers. Another major advantage of this embodiment resides in the fact that sizing of the vocal validation server in terms of processing capacity can be readily achieved relative to the company's needs, since it validates transactions of one company only.

As mentioned above, an alternative embodiment comprises locating the validation entity (vocal validation server) in an operator's network. In this way, the validation entity is a third party entity, which is independent from the second party or second party terminal.

According to this embodiment, the vocal validation server is located inside said operator's network. In this case, three separate entities are involved in validating an online transaction:
1) an operator, e.g., a service operator, an ISP, or a mobile phone operator,
2) a commercial site (e.g., a second party company proposing online transactions of goods and services over the internet), and
3) a customer, who is customer of both the commercial site and of said operator.

The major advantage of this embodiment besides in the fact that it provides a higher level of confidence to the customer since the origin of a validation request, e.g., a validation phone call, may be controlled more easily. This may be achieved, for instance, by checking that the calling number corresponds to a known number of the vocal validation server used by the customer's operator.

Note that if the operator is the customer's mobile phone operator, the mobile phone used as first party communication means in connection with the derivative communication medium may be configured by the operator in order to provide means for controlling the origin of a call and for providing an indication to the customer, whenever said origin corresponds to the vocal validation server of the operator.

Another advantage of this embodiment resides in the fact that personal information and means for joining a client (e.g., phone numbers, voice over IP (VoIP) identifier, identity (credentials), address, etc.) are maintained by the operator, who generally maintains this kind of information for billing purposes already. This means that the commercial site does not need to maintain lists of personal information for its customers. This further implies that customers do not have to maintain personal information on each commercial site which they use for placing online transaction orders.

As herein described, the solution as provided within the scope of the present invention solves security problems in connection with a "man in the middle" attack during online transaction. The described embodiments allow full automation of the validation process which leads to high scalability while enabling to use the same kind of processes which are employed in call centers which have to deal with massive online banking or retailing transactions. In this way, the proposed solution will strengthen confidence in the internet economy.

## Claims

1. A method of securing an online transaction, comprising the steps of:
- requesting a transaction by a first party (2) from a second party (3) over a public network (6), e.g., the internet;
- upon receiving the transaction request by the second party (3), sending a validation request to the first party (2);
- upon receiving the validation request by the first party (2), sending a validation reply from the first party (2);
- monitoring the validation reply for securing the online transaction by the second party (3);
**characterised by** the steps of:
- using a derivative communication medium (7), which is distinct from the public network (6), for sending the validation request to the first party (2);
- interactively replying to the validation request by the first party (2) over the derivative communication medium (7), particularly in real time.

2. The method of claim 1, further comprising sending the validation request in the form of an automated phone call, initiated by the second party (3) or a third party (9), to the first party (2).

3. The method of claim 1, further comprising automatically generating a transaction summary and including the transaction summary with the validation request.

4. The method of claim 1, further comprising:
- generating a validation code by the second party (3) or by a third party (9) on behalf of the second party (3);
- including the validation code in the validation request;
- repeating the validation code to the second party (3) or to the third party (9) when interactively replying to the validation request by the first party (2);
- checking the repeated validation code by the second party (3) or by the third party (9).

5. The method of claim 1, further comprising:
- generating a validation code by the second party (3);
- providing the validation code to the first party (2) by the second party (3) over the public network (6) during a transaction request procedure;
- repeating the validation code when interactively replying to the validation request by the first party (2);
- checking the repeated validation code by the second party (3).

6. The method of claim 1, further comprising:
- generating a validation code by the second party (3);
- providing the validation code to the first party (2) by the second party (3) over a further communication medium, which is distinct from the public network (6) and the derivative communication medium (7);
- repeating the validation code when interactively replying to the validation request initiated by the second party (3) or a third party (9) by the first party (2);
- checking the repeated validation code by the second party (3).

7. A system (1) for securing an online transaction between a first party (2) associated with a first party terminal (4) and a second party (3) associated with a second party terminal (5), wherein the first and second party terminals (4, 5) are connected over a public network (6), e.g., the internet, wherein:
- the first party terminal (4) comprises means for requesting the online transaction from the second party terminal (5) over the public network (6);
- the second party terminal (5) comprises means for receiving the transaction request and means for generating a validation request to the first party (2);
- the first party (2) has means for receiving the validation request and for sending a corresponding validation reply;
- the second party terminal (5) comprises means for monitoring the validation reply for securing the online transaction;
**characterised by**:
- a derivative communication medium (7), which is distinct from the public network (6), for sending the validation request to the first party (2) associated with the first party terminal (4);
- first party communication means (8) in connection with the derivative communication medium (7) for interactively replying to the validation request by the first party (2) over the derivative communication medium (7), particularly in real time.

8. The system (1) of claim 7, **characterised in that** the derivative communication network (7) is a phone network.

9. The system (1) of claim 7, **characterised by** a validation server (9), in particular a voice validation server, which is adapted to send the validation request on behalf of the second party (3) to the first party (2) over the derivative communication network (7).

10. The system (1) of claim 9, **characterised in that** the second party terminal (5) comprises the validation server (9).

11. The system (1) of claim 9, **characterised in that** the validation server (9) is a third party entity independent from the second party terminal (5).

12. The system (1) of claim 7, **characterised in that** the validation request comprises an audio validation request message.

13. The system (1) of claim 7, **characterised in that** the validation request comprises a summary, in particular a vocal summary, of the requested online transaction.
